# EUROPEAN PATENT APPLICATION

(11) **EP 4 665 069 A1**
(43) Date of publication of application: **17.12.2025**
(21) Application number: 23920411.8
(22) Date of filing: 08.02.2023
(51) Int. Cl.: H04W 76/10

(54) **PDU SESSION METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Stöckeler, Ferdinand
(86) International application number: PCT/CN2023/075083
(87) International publication number: WO 2024/164203

(57) **Abstract**

The embodiments of the present disclosure provide a PDU session method and apparatus, a communication device, and a storage medium. The PDU session establishment method performed by a user equipment (UE) may comprise: sending a first request message, wherein the first request message comprises a personal internet-of-things network (PIN) identifier (ID), and the first request message is used for requesting to a core network device to establish a PDU session; and receiving a first response message, wherein the first response message is used for indicating whether the PDU session based on the PIN ID has been successfully established.

## Description

### TECHNICAL FIELD

The present disclosure relates to the field of wireless communication technology but is not limited thereto, and the present disclosure relates in particular to a method and apparatus for establishing a protocol data unit (PDU) session, an electronic device, and a storage medium.

### BACKGROUND

The personal Internet network (PIN) is a technology that is composed of personal Internet network elements (PINEs) that communicate using a PIN direct connection or network connection, and is managed locally. PINEs within a PIN can include: a normal PINE, a PINE with gateway capability (PEGC), and a PINE with management Capability (PEMC). PEGC can be used for connecting the PIN to a mobile communication network. PEMC can be used for local management of PIN.

Typical normal PINEs may include but are not limited to: wearable device networks and smart home/smart office devices. A PINE can access the fifth generation mobile communication network (5th Generation, 5G) through a PEGC, and can then communicate with a device not in the PIN based on a mobile communication network such as 5G network.

### SUMMARY

Embodiments of the present disclosure provide a PDU session method and apparatus, a communication device, and a storage medium.

In a first aspect, an embodiment of the present disclosure provides a PDU session method, the method is performed by a user equipment (UE), and the method includes:
sending a first request message, wherein the first request message includes: a personal Internet network (PIN) identifier (ID), and the first request message is used for requesting a core network device to establish a PDU session; and
receiving a first response message, wherein the first response message is used for indicating whether a PDU session based on the PIN ID is successfully established.

In a second aspect, an embodiment of the present disclosure provides a method for establishing a protocol data unit (PDU) session, the method is performed by a core network device and includes:
in response to a message requesting to establish a PDU session being a first request message including a personal Internet network (PIN) identifier (ID), determining to accept or reject the PDU session based on the PIN ID; and
sending a first response message, wherein the first response message is used for indicating to a user equipment (UE) whether the PDU session based on the PIN ID is successfully established.

In a third aspect, an embodiment of the present disclosure provides a method for establishing a protocol data unit (PDU) session, the method is performed by an access management function (AMF) or a mobility management entity (MME), and the method includes:
in response to a message requesting to establish a PDU session being a first request message including a personal Internet network (PIN) identifier (ID), sending a second request message, wherein the second request message includes: the PIN ID; and the second request message is used by a session management function (SMF) to determine whether to accept or reject the establishment of a PDU session based on the PIN ID;
receiving a second response message, wherein the second response message is used for indicating acceptance or rejection of the establishment of the PDU session based on the PIN ID; and
sending a first response message, wherein the first response message is used for indicating whether the PDU session based on the PIN ID is successfully established.

In a fourth aspect, an embodiment of the present disclosure provides a method for establishing a protocol data unit (PDU) session, which is performed by a session management function (SMF) in a core network device. The method includes:
receiving a request message;
in response to the received request message being a second request message including a personal Internet network (PIN) identifier (ID), determining to accept or reject the establishment of the PDU session according to the PIN ID and subscription data of the PIN; and
sending a second response message, wherein the second response message is used for indicating, to an access management function (AMF) or a mobility management entity (MME), acceptance or rejection of the establishment of the PDU session based on the PIN ID.

In a fifth aspect, an embodiment of the present disclosure provides a method for establishing a protocol data unit (PDU) session, which is performed by a user data management (UDM) or a unified data repository (UDR) in a core network device, wherein the method includes:
receiving a request message;
in response to the request message being a third request message including a personal Internet network (PIN) identifier (ID), querying subscription data of the PIN; and
sending a third response message, wherein the third response message includes the subscription data of the PIN; wherein the subscription data of the PIN is at least used by a session management function (SMF) to determine whether to accept or reject the establishment of a PDU session based on the PIN ID.

In a sixth aspect, an embodiment of the present disclosure provides a method for establishing a protocol data unit (PDU) session, which is performed by a policy control function (PCF) in a core network device. The method includes:
receiving a request message;
in response to the request message being a fourth request message including a personal Internet network (PIN) identifier (ID), obtaining policy information of the PIN; and
sending a fourth response message, wherein the fourth response message includes the policy information of the PIN, wherein the policy information of the PIN is used by a session management function (SMF) to initiate establishment of a PDU session based on the PIN ID.

In a seventh aspect, an embodiment of the present disclosure provides an apparatus for establishing a protocol data unit (PDU) session, including:
a first sending module, configured to send a first request message, wherein the first request message includes: a personal Internet network (PIN) identifier (ID), and the first request message is used for requesting a core network device to establish a PDU session; and
a first receiving module, configured to receive a first response message, wherein the first response message is used for indicating whether the PDU session based on the PIN ID is successfully established.

In an eighth aspect, an embodiment of the present disclosure provides an apparatus for establishing a protocol data unit (PDU) session, including:
a first determination module, configured to, in response to the message requesting to establish the PDU session being a first request message including a personal Internet network (PIN) identifier (ID), determine whether to accept or reject the PDU session based on the PIN ID; and
a second sending module, configured to send a first response message, wherein the first response message is used for indicating to a user equipment (UE) whether the PDU session based on the PIN ID is successfully established.

In a ninth aspect, an embodiment of the present disclosure provides an apparatus for establishing a protocol data unit (PDU) session, including:
a third sending module, configured to, in response to a message requesting to establish the PDU session being a first request message including a personal Internet network (PIN) identifier (ID), send a second request message, wherein the second request message includes: the PIN ID; and the second request message is used by a session management function (SMF) to determine whether to accept or reject the establishment of a PDU session based on the PIN ID; and
a third receiving module, configured to receive a second response message, wherein the second response message is used for indicating acceptance or rejection of the establishment of the PDU session based on the PIN ID;
wherein the third sending module is configured to send a first response message, wherein the first response message is used for indicating to a user equipment (UE) whether the PDU session based on the PIN ID is successfully established.

In a tenth aspect, an embodiment of the present disclosure provides an apparatus for establishing a protocol data unit (PDU) session, including:
a fourth receiving module, configured to receive a request message;
a second determination module, configured to, in response to the received request message being a second request message including a personal Internet network (PIN) identifier (ID), determine whether to accept or reject the establishment of the PDU session according to the PIN ID and subscription data of the PIN; and
a fourth sending module, configured to send a second response message, wherein the second response message is used for indicating, to an access management function (AMF) or a mobility management entity (MME), acceptance or rejection of the establishment of the PDU session based on the PIN ID.

In an eleventh aspect, an embodiment of the present disclosure provides an apparatus for establishing a protocol data unit (PDU) session, including:
a fifth receiving module, configured to receive a request message;
a query module, configured to, in response to the request message sent by a second network device being a third request message including a personal Internet network (PIN) identifier (ID), query subscription data of the PIN; and
a fifth sending module, configured to send a third response message, wherein the third response message includes the subscription data of the PIN; wherein the subscription data of the PIN is at least used by a session management function (SMF) to determine whether to accept or reject the establishment of a PDU session based on the PIN ID.

In a twelfth aspect, an embodiment of the present disclosure provides an apparatus for establishing a protocol data unit (PDU) session, including:
a sixth receiving module, configured to receive a request message;
an obtaining module, configured to, in response to the request message sent by a second network device being a fourth request message including a personal Internet network (PIN) identifier (ID), obtain policy information of the PIN; and
a sixth sending module, configured to send a fourth response message, wherein the fourth response message includes the policy information of the PIN, wherein the policy information of the PIN is used by a session management function (SMF) to establish a PDU session based on the PIN ID.

In a thirteenth aspect, an embodiment of the present disclosure provides a method for establishing a PDU session, which includes: a user equipment (UE), an access management function (AMF) or a mobility management entity (MME), and a session management function (SMF); sending, by the UE, a first request message, wherein the first request message includes: a personal Internet network (PIN) identifier (ID), and the first request message is used for requesting to establish a PDU session;
receiving, by the UE, a first response message, wherein the first response message is used for indicating whether the PDU session based on the PIN ID is successfully established;
in response to the message requesting to establish the PDU session being the first request message including the personal Internet network (PIN) identifier (ID), sending, by the AMF or MME, a second request message, wherein the second request message includes: the PIN ID; and the second request message is used by the SMF to determine whether to establish the PDU session based on the PIN ID; receiving, by the AMF or MME, a second response message, wherein the second response message is used for indicating to accept or reject the establishment of a PDU session based on the PIN ID; sending, by the AMF or MME, a first response message, wherein the first response message is used for indicating whether the PDU session based on the PIN ID is successfully established;
receiving, by the SMF, a request message; in response to the received request message being a second request message including a personal Internet network (PIN) identifier (ID), determining, by the SMF, to accept or reject the establishment of the PDU session based on the PIN ID and the subscription data of the PIN; and sending, by the SMF, a second response message, wherein the second response message is used for indicating to accept or reject the establishment of the PDU session based on the PIN ID.

In a fourteenth aspect, an embodiment of the present disclosure provides a communication system, which is used for the method for establishing a PDU session provided in the first and second aspects above.

In a fifteenth aspect, an embodiment of the present disclosure provides a communication system, including the following network elements:
an access management function (AMF) or mobility management entity (MME) for performing the method according to the third aspect;
a session management function (SMF) for performing the method according to the fourth aspect;
a user data management (UDM) or unified data repository (UDR) for performing the method according to the fifth aspect;
a policy control function (PCF) for performing the method according to the sixth aspect.

In a sixteenth aspect, an embodiment of the present disclosure provides a communication device, including a processor, a transceiver, a memory, and an executable program stored in the memory and executable by the processor, wherein when the processor executes the executable program, the technical solution provided in any of the first to sixth aspects and the twelfth aspect is implemented.

In a seventeenth aspect, an embodiment of the present disclosure provides a computer storage medium, which stores an executable program; after the executable program is executed by a processor, the technical solution provided in any of the first to sixth aspects and the twelfth aspect is implemented.

In the technical solutions provided by the embodiments of the present disclosure, the UE can initiate a PDU session based on the PIN ID, thereby ensuring the quality of service of the PIN service through the PDU session establishment process.

It should be understood that the foregoing general description and the following detailed description are exemplary and explanatory only and are not restrictive of the embodiments of the present disclosure.

### BRIEF DESCRIPTION OF THE DRAWINGS

The accompanying drawings herein are incorporated in and constitute a part of the specification, illustrate embodiments consistent with the present disclosure, and together with the description, serve to explain the principles of the embodiments of the present disclosure.
Fig. 1A is a schematic structural diagram of a wireless communication system according to an exemplary embodiment;
Fig. 1B is a flow chart of a method for establishing a PDU session according to an exemplary embodiment;
Fig. 1C is a flow chart of a method for establishing a PDU session according to an exemplary embodiment;
Fig. 1D is a flow chart of a method for establishing a PDU session according to an exemplary embodiment;
Fig. 1E is a flow chart of a method for establishing a PDU session according to an exemplary embodiment;
Fig. 2A is a flow chart of a method for establishing a PDU session according to an exemplary embodiment;
Fig. 2B is a flow chart of a method for establishing a PDU session according to an exemplary embodiment;
Fig. 3A is a flow chart of a method for establishing a PDU session according to an exemplary embodiment;
Fig. 3B is a flow chart of a method for establishing a PDU session according to an exemplary embodiment;
Fig. 4A is a flow chart of a method for establishing a PDU session according to an exemplary embodiment;
Fig. 4B is a flow chart of a method for establishing a PDU session according to an exemplary embodiment;
Fig. 4C is a flow chart of a method for establishing a PDU session according to an exemplary embodiment;
Fig. 4D is a flow chart of a method for establishing a PDU session according to an exemplary embodiment;
Fig. 5A is a flow chart of a method for establishing a PDU session according to an exemplary embodiment;
Fig. 5B is a flow chart of a method for establishing a PDU session according to an exemplary embodiment;
Fig. 6A is a flow chart of a method for establishing a PDU session according to an exemplary embodiment;
Fig. 6B is a flow chart of a method for establishing a PDU session according to an exemplary embodiment;
Fig. 7 is a flow chart of a method for establishing a PDU session according to an exemplary embodiment;
Fig. 8 is a schematic structural diagram of an apparatus for establishing a PDU session according to an exemplary embodiment;
Fig. 9 is a schematic structural diagram of an apparatus for establishing a PDU session according to an exemplary embodiment;
Fig. 10 is a schematic structural diagram of an apparatus for establishing a PDU session according to an exemplary embodiment;
Fig. 11 is a schematic structural diagram of an apparatus for establishing a PDU session according to an exemplary embodiment;
Fig. 12 is a schematic structural diagram of an apparatus for establishing a PDU session according to an exemplary embodiment;
Fig. 13 is a schematic structural diagram of an apparatus for establishing a PDU session according to an exemplary embodiment;
Fig. 14 is a schematic structural diagram of a UE according to an exemplary embodiment;
Fig. 15 is a schematic structural diagram of a network device according to an exemplary embodiment.

### DETAILED DESCRIPTION

Exemplary embodiments will be described in detail herein, examples of which are shown in the accompanying drawings. When the following description refers to the drawings, unless otherwise indicated, the same numbers in different drawings represent the same or similar elements. The embodiments described in the following exemplary embodiments do not represent all embodiments consistent with the embodiments of the present disclosure. Instead, they are merely examples of devices and methods consistent with some aspects of the embodiments of the present disclosure.

Terms used in the embodiments of the present disclosure are only for the purpose of describing specific embodiments, and are not intended to limit the embodiments of the present disclosure. The singular forms "a", and "the" used in the present disclosure are also intended to include plural forms, unless the context clearly indicates other meanings. It should also be understood that the terms "and/or" used in this specification refer to and include any or all possible combinations of one or more associated listed items.

It should be understood that, although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the term "if" as used herein may be interpreted as being determined "when ..." or "in a case that..." or "in response to ...".

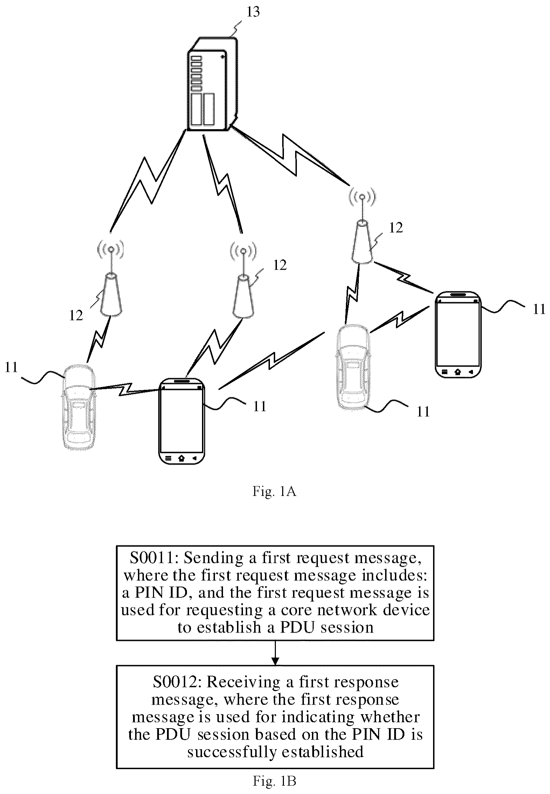

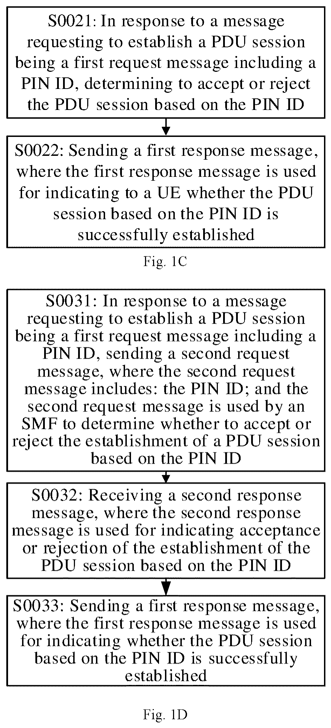

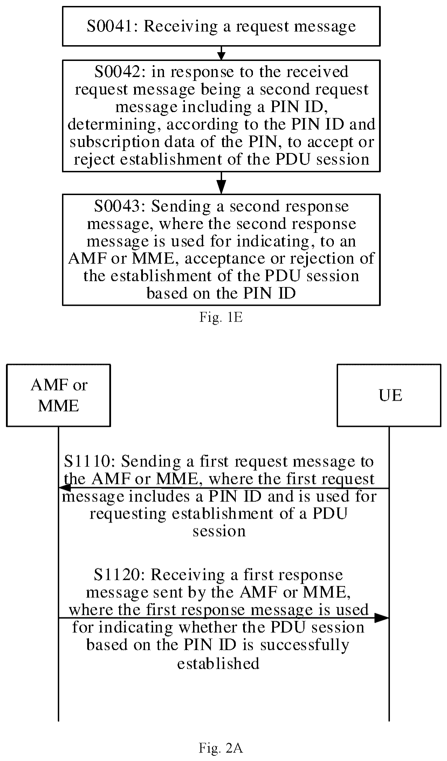

Please refer to Fig. 1A, which shows a schematic structural diagram of a wireless communication system provided by an embodiment of the present disclosure. As shown in Fig. 1A, the wireless communication system is a communication system based on cellular mobile communication technology, and the wireless communication system may include: a plurality of UEs 11 and a plurality of access devices 12. In some embodiments, the communication system may also include: one or more core network devices, which are not shown in Fig. 1. The core network device includes, but is not limited to: a mobile management entity (MME) or access management function (AMF), a session management function (SMF), a policy control function (PCF) and/or a user plane function (UPF), etc.

UE 11 can be a device that provides voice and/or data connectivity to users. UE 11 can communicate with one or more core networks via a radio access network (RAN). UE 11 can be an Internet of Things UE, such as a sensor device, a mobile phone (or a cellular phone) and a computer with an Internet of Things UE, for example, it can be a fixed, portable, pocket-sized, handheld, computer-built-in or vehicle-mounted device. For example, a station (STA), a subscriber unit, a subscriber station, a mobile station, a mobile, a remote station, an access point, a remote terminal, an access terminal, a user terminal, a user agent, a user device, or a user equipment (UE). Alternatively, UE 11 can also be a device of an unmanned aerial vehicle. Alternatively, UE 11 can also be a vehicle-mounted device, for example, it can be a driving computer with wireless communication function, or a wireless communication device connected to a driving computer. Alternatively, UE 11 may also be a roadside device, for example, a street lamp, a signal lamp or other roadside device with a wireless communication function.

The access device 12 may be a network side device in a wireless communication system. The wireless communication system may be a fourth generation mobile communication technology (4G) system, also known as a long term evolution (LTE) system; or the wireless communication system may be a 5G system, also known as a new radio (NR) system or a 5G NR system. Alternatively, the wireless communication system may be a next generation system emerging after the 5G system. The access network in the 5G system may be called new generation-radio access network (NG-RAN). Alternatively, the wireless communication system may be a machine-type communications (MTC) system.

The access device 12 can be an evolved base station (eNB) adopted in a 4G system. Alternatively, the access device 12 can also be a base station (gNB) adopting a centralized distribution architecture in a 5G system. When the access device 12 adopts a centralized distribution architecture, it usually includes a central unit (CU) and at least two distributed units (DUs). The central unit is provided with a protocol stack of a packet data convergence protocol (PDCP) layer, a radio link control (RLC) layer, and a media access control (MAC) layer; the distributed unit is provided with a physical (PHY) layer protocol stack. The embodiments of the present disclosure do not limit the specific implementation of the access device 12.

The access device 12 and the UE 11 can establish a wireless connection through a wireless air interface. In different implementations, the wireless air interface may be a wireless air interface based on the fourth generation mobile communication network technology (4G) standard; or the wireless air interface may be a wireless air interface based on the fifth generation mobile communication network technology (5G) standard, for example, the wireless air interface is a NR interface; or the wireless air interface may be a wireless air interface of the next generation mobile communication network technology standard based on 5G.

PIN connection supports communication allowing the PINE. Such PINE communication may include: communication between PINEs via PINE direct connection, communication between PINEs based on PEGC, and/or communication between PINEs or between PINEs and PIN external devices based on PEGC and a mobile communication network (e.g., 4G and/or 5G as shown in Fig. 1).

One or more applications (APPs) can run in a PINE. Different APPs may have different quality of service (QoS) requirements for their services. Therefore, the service data forwarded, relayed or transparently transmitted by PEGC is required to meet the corresponding QoS requirements. Therefore, how to ensure the QoS of PIN services is an issue that needs to be further solved in related technologies.

As shown in Fig. 1B, an embodiment of the present disclosure provides a method for establishing a PDU session, which can be performed by a UE and includes:
S0011: Sending a first request message, wherein the first request message includes: a personal Internet network (PIN) identifier (ID), and the first request message is used for requesting a core network device to establish a PDU session;
S0012: Receiving a first response message, wherein the first response message is used for indicating whether the PDU session based on the PIN ID is successfully established.

The UE may be a terminal device that can be connected to a mobile communication network. For example, the UE may be a terminal device that can be connected to a 4G or 5G network. The UE may include, but is not limited to: a notebook, a tablet computer, a wearable device, a smart home device, a smart office device, a vehicle-mounted device and/or a flight device. In short, the UE can be connected to the access device shown in Fig. 1A to use the mobile communication network.

The UE may send a first request message, the first request message including a PIN ID. The PIN ID may be used to identify a PIN established based on the UE, or a PIN to which the UE belongs. After the first request message is relayed or forwarded to a core network device, the first request message may be used by the core network device to accept or reject a PDU session which the UE requests to establish based on the PIN ID.

The PIN may include one or more PINEs, which may be smart home devices, smart office devices, smart charging devices, smart vending devices, etc. Of course, this is just an example of the PINE in the PIN, and the specific implementation is not limited to this example.

The first response message here is used for the UE to determine whether it is authorized to establish a PDU session based on the PIN ID. If the UE is authorized to establish a PDU session based on the PIN ID, the network device on the network side will start the PDU session establishment, which means that the PDU session establishment based on the PIN ID is successful, otherwise the establishment fails. The first response message can indicate, through its own message format and/or the content it carries, whether the PDU session based on the PIN ID is successfully established.

The first request message requests to establish a PDU session based on a PIN or a PIN ID. The first request message may be a PDU session establishment request message. The PDU session based on a PIN or a PIN ID may be used to transmit service data of a PIN service.

After the UE sends the first request message, it will receive a first response message sent by the core network device, the first response message can be a success response message or a failure response message. The success response message can be used for indicating that the first network device accepts the establishment of the PDU session, and the failure response message can indicate that the first network device rejects the establishment of the PDU session.

If the first response message is a success response message, the first response message may include: a PDU session identifier (ID) assigned by the core network device, and the UE may subsequently utilize a PDU session based on the PDU ID. Therefore, in the embodiments of the present disclosure, by establishing a PDU session, the QoS of the PIN service can be ensured based on the PDU session process, thereby improving the quality of communication services based on the PIN.

Since the UE can be connected to the mobile communication network, the UE itself can initiate a PDU session establishment request that is not related to the PIN service, or can initiate a PDU session establishment request that is associated with the PIN service. That is, in some embodiments, when the PDU session requested to be established is associated with the PIN service, a first request message containing the PIN ID is sent to the first network device.

As shown in Fig. 2A, an embodiment of the present disclosure provides a method for establishing a PDU session, wherein the method is performed by a UE and includes:
S1110: Sending a first request message to an AMF or MME, where the first request message includes a PIN ID and is used for requesting establishment of a PDU session;
S1120: Receiving a first response message sent by the AMF or MME, where the first response message is used for indicating whether the PDU session based on the PIN ID is successfully established.

AMF or MME is a device that performs mobility management of UEs.

In some embodiments, the method may further include: determining whether the to-be-established PDU session is associated with a PIN service; the sending the first request message includes: when the to-be-established PDU session is associated with the PIN service, sending the first request message.

That is, the PIN ID is carried in the first request message only when the UE initiates a PDU establishment request associated with the PIN service. If the PDU session initiated by the UE is not related to the PIN service, the PDU session establishment request sent to the first network device does not contain the PIN ID, and includes other IDs of the UE, such as the temporary mobile subscriber identity (TMSI) or the subscription concealed identifier (SUCI). If the first request message already contains the PIN ID, the first request message may carry the UE identification information such as the TMSI or SUCI of the UE, or it may not carry the UE identification information.

By carrying, by the UE, the PIN ID in the first request message requesting to establish a PDU session, the first network device will know, after receiving the first request message, that the PDU session currently requested by the UE to establish is associated with the PIN service or is associated with the PIN identified by the PIN ID. Therefore, the first network device can determine whether to accept the establishment of the PDU session or configure the QoS parameters of the PDU session, based on the PIN subscription data and/or special requirements of the PIN service.

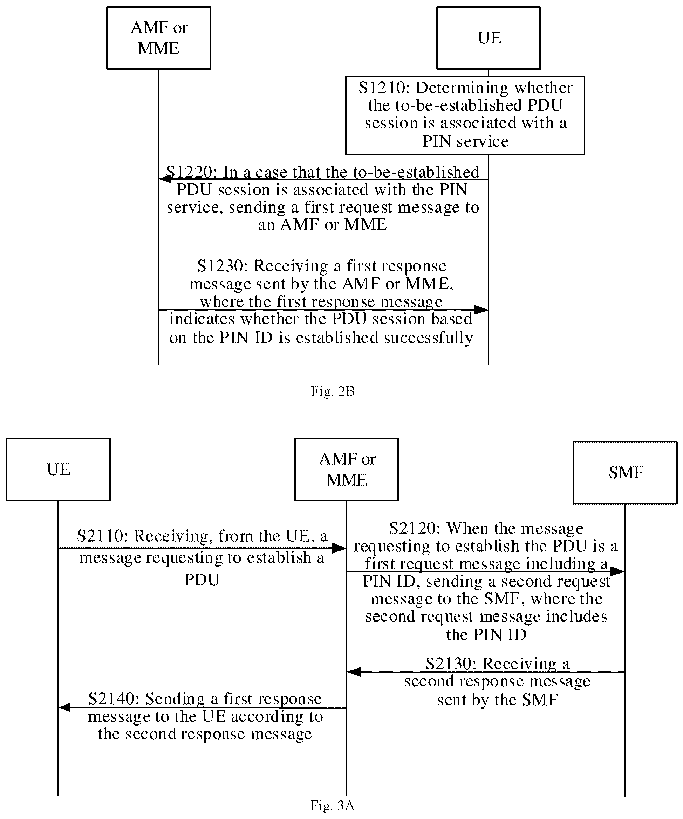

For example, as shown in Fig. 2B, an embodiment of the present disclosure provides a method for establishing a PDU session, the method is performed by a user equipment (UE) and includes:
S1210: Determining whether the to-be-established PDU session is associated with a PIN service;
S1220: In a case that the to-be-established PDU session is associated with the PIN service, sending a first request message to an AMF or MME;
S1230: Receiving a first response message sent by the AMF or MME, where the first response message indicates whether the PDU session based on the PIN ID is established successfully.

In some embodiments, determining whether the to-be-established PDU session is associated with the PIN service includes at least one of:
in a case that a PIN service request sent by at least one personal Internet network element PINE in the PIN is received, determining that the to-be-established PDU session is associated with the PIN service;
in a case that a PDU session establishment indication associated with the PIN service is detected, determining that the to-be-established PDU session is associated with the PIN service; or
in a case that a service involved in the to-be-established PDU session includes the PIN service, determining that the to-be-established PDU session is associated with the PIN service.

For example, a normal PINE or PEMC in a PIN can communicate, through a non-3GPP protocol such as a PIN protocol, with a UE that can be connected to a mobile communication network, thereby sending a PIN service request to the UE. When the UE receives a PIN service request from another PINE that cannot be directly connected to a mobile communication network, the UE can confirm that the to-be-established PDU session is related to the PIN service.

For another example, when the UE receives one or more PIN service requests from the PIN direct connection communication, the UE determines that the to-be-established PDU session is associated with the PIN service.

For another example, the UE itself may also initiate a PIN service request. For example, when an indication to initiate the establishment of a PDU session associated with the PIN service is received on a user interface (UI), the to-be-established PDU session may be considered to be associated with the PIN service. Exemplarily, when the UE, as a PEGC, PEMC and/or normal PINE in a PIN that has the ability to connect to a mobile communication network, receives an indication to establish a PDU session associated with the PIN service on the UI interface, or receives an indication to establish a PDU session associated with the PIN service from an upper-layer control device, the to-be-established PDU session may be considered to be a PDU session associated with the PIN service, and the UE will initiate an establishment request process for a PDU session based on the PIN ID.

For example, if one or more PIN service-related applications are installed in the UE, and the PDU is initiated based on such an application, then the to-be-established PDU session can be considered to be associated with the PIN service.

In some other embodiments, the UE finds that the service identifier corresponding to the to-be-established PDU session is the identifier of the PIN service. In short, if the service of the PDU session to be initiated includes the PIN service, it is considered that the to-be-established PDU session is associated with the PIN service.

In summary, in embodiments of the present disclosure, before the UE sends a PDU session establishment request including a PIN ID, the UE will determine whether the to-be-established PDU session is associated with the PIN service. Only when the to-be-established PDU session is associated with the PIN service, the PIN ID is included, which also helps the network side to specifically enhance the communication instructions for the PIN service.

In some embodiments, the UE is a PEGC. In other embodiments, the UE that initiates the first request message containing the PIN ID may also be a PMEC or a normal PINE in the PIN that has the ability to access the mobile communication network. If the UE is a PEGC, the PEGC of the PIN can conveniently manage the communication between the PINE and the mobile communication network in a unified manner.

As shown in Fig. 1C, an embodiment of the present disclosure provides a method for establishing a PDU session, which is performed by a core network device, and includes:
S0021: In response to a message requesting to establish a PDU session being a first request message including a personal Internet network (PIN) identifier (ID), determining to accept or reject the PDU session based on the PIN ID;
S0022: Sending a first response message, where the first response message is used for indicating to a user equipment (UE) whether the PDU session based on the PIN ID is successfully established.

The core network device may be any one or more core network devices. The core network devices may directly or indirectly receive a first request message including a PIN ID from the UE, and establish a PDU session for a PIN identified by the PIN ID, so as to achieve QoS of PIN service transmission through the establishment of the PDU session.

In some embodiments, in response to the message requesting to establish the PDU session being the first request message including the PIN ID, determining to accept or reject the PDU session based on the PIN ID includes:
in response to the message requesting to establish the PDU session being the first request message including the PIN ID, and based on subscription data of the PIN identified by the PIN ID permitting the establishment of a PDU session, establishing the PDU session based on the PIN ID.

For example, the subscription data of the PIN may include at least one of:
capability information, indicating whether the PIN identified by the PIN ID has a PDU session capability, or whether the UE has PEGC and/or PEMC capability;
time information, indicating a time range in which establishment of a PDU session based on a PIN ID is permitted, or a time range in which establishment of a PDU session based on a PIN ID is prohibited;
spatial information, indicating a spatial range in which a PDU session is permitted to be established based on a PIN ID, or a spatial range in which a PDU session is prohibited to be established based on a PIN ID; or
bandwidth information, indicating a bandwidth range which is allowed to be used by the PDU session established based on the PIN ID.

In an embodiment, in response to the message requesting to establish the PDU session being the first request message including the PIN ID, determining to accept or reject the PDU session based on the PIN ID includes:
in response to the message requesting to establish the PDU session being the first request message including the PIN ID, and based on subscription data of the PIN identified by the PIN ID not permitting the establishment of a PDU session, rejecting the PDU session based on the PIN ID.

There are many ways to determine according to the subscription data of the PIN whether to allow or reject the establishment of a PDU session based on the PIN ID. For example, when determining, according to the subscription data of the PIN, to accept or reject to establish a PDU session based on the PIN ID, at least one of the following manners can be adopted:
when the capability information indicates that the PIN does not have PDU session capability, or the UE does not have PEGC and/or PEMC capability, sending a rejection message to the first network device;
when the capability information indicates that the PIN has a PDU session capability, or the UE has PEGC and/or PEMC capability, sending an acceptance message including the PIN ID to the first network device;
when the establishment time of the requested PDU session is within the time range in which the establishment of the PDU session is permitted, sending an acceptance message including the PIN ID to the first network device;
when the establishment time of the requested PDU session is outside the time range in which the establishment of the PDU session is permitted, sending a rejection message to the first network device;
when the establishment time of the requested PDU session is within a time range in which establishment of the PDU session is prohibited (i.e., not permitted), sending a rejection message to the first network device;
when the establishment time of the requested PDU session is outside the time range in which establishment of the PDU session is prohibited (i.e., not permitted), sending an acceptance message including the PIN ID to the first network device;
when the UE requesting the PDU session is located within the spatial range in which establishment of the PDU session is permitted, sending an acceptance message including the PIN ID to the first network device;
when the UE requesting the PDU session is located outside the spatial range in which establishment of the PDU session is permitted, sending a rejection message to the first network device;
when the UE requesting the PDU session is located within the spatial range in which establishment of the PDU session is prohibited (i.e., not permitted), sending a rejection message to the first network device; or
when the UE requesting the PDU session is located outside the spatial range in which establishment of the PDU session is prohibited (i.e., not permitted), sending an acceptance message including the PIN ID to the first network device.

As shown in Fig. 1D, an embodiment of the present disclosure provides a method for establishing a PDU session, the method is performed by an AMF or an MME, and includes:
S0031: In response to a message requesting to establish a PDU session being a first request message including a PIN ID, sending a second request message, wherein the second request message includes: the PIN ID; and the second request message is used by a session management function (SMF) to determine whether to accept or reject the establishment of a PDU session based on the PIN ID;
S0032: Receiving a second response message, where the second response message is used for indicating acceptance or rejection of the establishment of the PDU session based on the PIN ID;
S0033: Sending a first response message, wherein the first response message is used for indicating whether the PDU session based on the PIN ID is successfully established.

After the AMF or MME receives the first request message sent by the UE, the AMF or MME can send a second request message, and the second request message will be sent directly or indirectly to the SMF, and the SMF will further determine whether to accept or reject the establishment of the PDU session based on the PIN ID.

In some embodiments, in response to the message requesting to establish the PDU session being the first request message including the PIN ID, sending the second request message includes:
in response to the message requesting to establish the PDU session being the first request message including the PIN ID, selecting the SMF supporting a PIN service session.

There may be SMFs that support PIN services and SMFs that do not support PIN services in the network. Since the PDU session is established based on the PIN ID, it is necessary to select an SMF that supports the PIN service, to achieve that the established PDU session is suitable for data transmission of the PIN service.

In some embodiments, in response to the second response message including the PDU session ID, the second response message further includes at least one of:
quality of service (QoS) flow identifier (QFI);
QoS profile.

The QFI may be associated with one or more groups of QoS parameters. The amount of QFIs in the second response message may be one or more. The QoS parameters associated with different QFIs are at least partially different from each other.

A QoS profile may include at least one of: a QoS rule, a QoS flow level, and/or a QoS parameter.

The QoS profile can also be used by the access device to initiate an update process based on a PDU session.

The QoS parameters may include but are not limited to: bandwidth parameters and/or delay parameters, etc. The bandwidth parameters may include but are not limited to: minimum guaranteed bandwidth, or maximum guaranteed bandwidth and/or maximum allowed delay, etc., which can be used for monitoring PDU sessions.

As shown in Fig. 3A, an embodiment of the present disclosure provides a method for establishing a protocol data unit PDU session, the method is performed by an AMF or an MME, and includes:
S2110: Receiving, from the UE, a message requesting to establish a PDU;
S2120: When the message requesting to establish the PDU is a first request message including the PIN ID, sending a second request message to the SMF, wherein the second request message includes a PIN ID;
S2130: Receiving a second response message sent by the SMF;
S2140: Sending a first response message to the UE according to the second response message.

The AMF or MME may be a core network device. The core network device includes but is not limited to a network device that performs mobility management and/or registration management of the UEs, such as an AMF and/or MME.

In this embodiment of the present disclosure, the AMF or MME receives various messages requesting the establishment of a PDU session. For example, upon receiving a first request message carrying a PIN ID, it may be considered that the current UE is requesting the establishment of a PDU session based on the PIN or PIN ID.

If the first request message includes a PIN ID, a second request message including the PIN ID will be sent to the SMF. The second request message carries the PIN ID, indicating that the AMF or MME requests the SMF to determine whether the PDU session currently requested by the UE can be established. The authorization result of the SMF will be carried in the second response message, or indicated by the second response message.

The SMF may be a core network device different from the AMF or MME. For example, the SMF may include but is not limited to: a session management function (SMF). The SMF may be a dedicated network device for PDU session management. The second request message may include but is not limited to: a PDU session establishment session management (SM) context request message. If the second request message is a PDU session establishment session management (SM) context request message, the second response message may be a PDU session SM context response message.

After receiving the second response message, the AMF or MME may send the first response message to the UE.

For example, the second response message indicates that the PDU session establishment is accepted, and a success response message is sent to the UE, otherwise a failure response message is sent to the UE. The success response message may include the PDU session ID, etc. The failure response message may include a failure indication and/or a cause indication. The failure indication directly indicates that the PDU session establishment failed. The cause indication indicates the cause of the PDU session establishment failure.

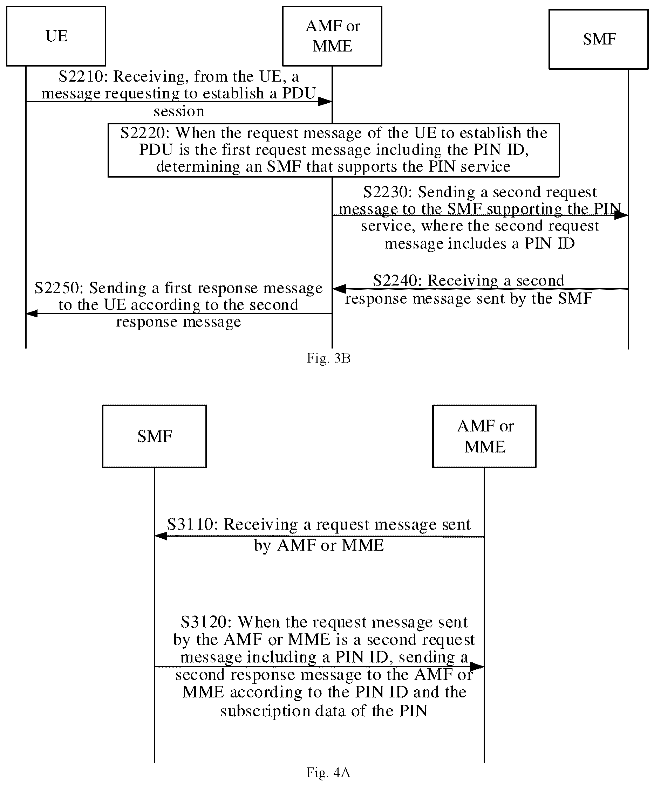

As shown in Fig. 3B, an embodiment of the present disclosure provides a method for establishing a protocol data unit (PDU) session, the method is performed by an AMF or an MME, and includes:
S2210: Receiving, from the UE, a message requesting to establish a PDU session;
S2220: When the message requesting to establish the PDU is the first request message including the PIN ID, determining an SMF that supports the PIN service;
S2230: Sending a second request message to the SMF supporting the PIN service, wherein the second request message includes a PIN ID;
S2240: Receiving a second response message sent by the SMF;
S2250: Sending a first response message to the UE according to the second response message.

There are one or more devices deployed in the core network that can be used as SMF candidates, some of which support PIN services, while others do not. Although certain device has the service capabilities for supporting PIN services, the device may not want to provide PIN services at present, and in this case, it can be considered that the device currently does not support PIN services.

In this embodiment of the present disclosure, the first request message received by the AMF or MME includes a PIN ID, and it can be considered that the PDU session which the UE currently requests to establish is associated with the PIN service, and the SMF supporting the PIN service will be determined based on a pre-configuration.

For example, the pre-configuration may be the identification information and/or address information of the SMF supporting the PIN and the service that the communication operator pre-configures on the AMF or MME. For example, the SMF supporting the PIN service may also provide session management for non-PIN services.

In summary, through the selection of SMF, it can be ensured that the established PDU session provides the QoS guarantee required by the PIN service.

In some embodiments, when it is requested to establish a PIN, a specific SMF is configured to support its PIN service. At this time, the AMF or MME will store the PIN ID and the corresponding information of the specific SMF during the PIN establishment process. At this time, the AMF or MME can query the information (for example, identification information and/or IP address) of the SMF corresponding to the PIN ID based on the PIN ID, and also achieve the selection of the SMF that supports the PIN service, and the specific SMF bound or registered during the PIN establishment phase is selected, so that the specific SMF can be used to provide personalized PIN services for the PIN.

In some embodiments, sending the first response message to the PEGC according to the second response message includes: when the second response message includes the PDU session ID, sending a PDU session establishment acceptance message to the UE.

The success response message corresponding to the PDU session establishment request message can be a PDU session establishment acceptance message. If the SMF determines to accept the PDU session, it will assign a PDU session ID and initiate the establishment of the PDU session. The establishment of the PDU session includes: the establishment of an N4 session between core network devices such as SMF and UPF. If the AMF or MME receives the PDU session ID assigned by the SMF, it is considered that the SMF authorizes the establishment of a PDU session based on the PIN or PIN ID. At this time, the PDU session ID is carried in the first response message, so that the UE is informed through the PDU session ID that the network side accepts the establishment of the PDU session.

For example, when the second response message includes the PDU session ID, the second response message also includes at least one of:
a QoS Flow Identifier (QFI);
a QoS profile.

The QFI may be associated with one or more groups of QoS parameters. The QFI carried in the second response message may be one or more QFIs. Different QFIs may be associated with different QoS parameters.

A QoS profile may include at least one of: a QoS rule, a QoS flow level, and/or a QoS parameter.

The QoS profile can also be used by the access device to initiate an update process based on a PDU session.

The QoS parameters may include but are not limited to: bandwidth parameters and/or delay parameters, etc. The bandwidth parameters may include but are not limited to: minimum guaranteed bandwidth, or maximum guaranteed bandwidth and/or maximum allowed delay, etc., which can be used for monitoring PDU sessions.

Of course, the above is only an example of QoS parameters, and the specific implementation is not limited to this example.

In some embodiments, the method further includes:
when the second response message is a rejection message, sending a PDU session establishment rejection message to the UE.

If the failure response message corresponding to the PDU session establishment request message is a PDU session establishment rejection message, the message format and/or encapsulation method of the PDU session establishment rejection message of the non-PIN service can be used to send a message indicating the PDU session establishment failure to the UE, so as to inform that the PDU session establishment failed. In some other embodiments, the method further includes:
when the second response message sent by the SMF is not received within the preset time duration after sending the second request message, sending a PDU session establishment rejection message to the UE;
   or
when the second response message sent by SMF is not received within the preset time duration after sending the second request message, resending the second request message to SMF, when the number of times the second request message has been sent reaches the maximum number of times or a rejection message is received, sending a PDU session establishment rejection message to the UE.

In some embodiments, the method further includes:
determining the user subscription permanent identity (SUPI) of the UE according to the PIN ID; and
sending a second request message including the PIN ID and SUPI to the SMF.

If the first request message does not carry other identifiers of the UE, since the UE is a PINE of the PIN, its SUPI will be carried in the configuration file or configuration information of the PIN that is stored in the AMF or MME. In this way, the AMF or MME can query the SUPI of the UE based on the PIN ID, rather than querying its SUPI based on the TMSI or SUCI of the UE. After querying the SUPI of the UE, the SUPI of the UE will be included in the second request message in addition to the PIN ID. In this way, it is convenient for the SMF to determine, based on the SUPI, to establish the PDU session between which UE and the network side.

As shown in Fig. 1E, an embodiment of the present disclosure provides a method for establishing a protocol data unit (PDU) session, the method is performed by a session management function (SMF) in a core network device, and includes:
S0041: Receiving a request message;
S0042: in response to the received request message being a second request message including a PIN ID, determining, according to the PIN ID and subscription data of the PIN, to accept or reject establishment of the PDU session;
S0043: Sending a second response message, where the second response message is used for indicating, to an access management function (AMF) or a mobility management entity (MME), acceptance or rejection of the establishment of the PDU session based on the PIN ID.

The SMF is a device that can perform PDU session management, and the PDU session management includes but is not limited to: PDU session establishment and/or PDU session update, etc.

Based on the PDU session establishment request message from UE, AMF or MME will request SMF to establish a PDU session, and then SMF will receive the request message from AMF or MME. At this time, the request message sent by AMF or MME can be divided, according to whether it contains a PIN ID, into two categories: a second request message containing a PIN ID, and other request messages that do not contain a PIN ID.

The second request message may include a PDU session establishment session management (SM) context request message sent by the AMF or MME.

If the second request message carries the PIN ID, it means that the establishment process of this PDU session is initiated by PIN or the PIN service, or is managed by the PIN or the PIN service.

At this time, the SMF obtains the subscription data of the PIN instead of the subscription data of the UE. In the subscription data of the PIN, the subscriber is the PIN, while in the subscription data of the UE, the subscriber is the UE.

According to the subscription data of the PIN, it can be known whether the establishment of a PDU session based on the PIN is currently allowed, or whether the establishment of a PDU session associated with the PIN service is allowed (i.e., authorized).

In some embodiments, in response to the received request message being a second request message including a personal Internet network (PIN) identifier (ID), determining to accept or reject the establishment of the PDU session according to the PIN ID and the subscription data of the PIN, includes:
sending a third request message, wherein the third request message includes the PIN ID and is used for requesting the subscription data of the PIN; and receiving a third response message, wherein the third response message includes the subscription data of the PIN.

Here, an SMF obtains the subscription data of a PIN from other core network devices. The specific implementation is not limited to the above example. Of course, the subscription data of the PIN obtained by the SMF may also be the subscription data of the PIN stored locally.

In some embodiments, the method further includes:
in response to permitting the establishment of the PDU session based on the PIN ID, sending a fourth request message; wherein the fourth request message comprises the PIN ID, and the fourth request message is used for requesting policy information; and
receiving a fourth response message, wherein the fourth response message includes the policy information; the policy information is used for establishing the PDU session.

As shown in Fig. 4A, an embodiment of the present disclosure provides a method for establishing a PDU session, the method is performed by SMF and includes:
S3110: Receiving a request message sent by AMF or MME;
S3120: When the request message sent by the AMF or MME is a second request message including a PIN ID, sending a second response message to the AMF or MME according to the PIN ID and the subscription data of the PIN; where the second response message is used by the AMF or MME to determine whether to accept the establishment of the PDU session.

In short, SMF sends a second response message fed back based on the second request message to AMF or MME. The second response message can be an acceptance message and/or a rejection message. If it is an acceptance message, the SMF initiates the establishment of a PDU session, and based on the acceptance message, AMF or MME will inform UE of the acceptance of the establishment of the PDU session, as well as the ID of the PDU session being established or the ID of the PDU session of which the establishment has already been initiated (i.e., PDU session ID).

If it is a rejection message, the SMF will not initiate PDU session establishment based on the second request message. In some embodiments, the failure cause will be carried in the rejection message.

The failure cause may indicate at least one of:
the PIN identified by the PIN ID is not authorized to request a PDU session;
the requested establishment time for establishing a PDU session does not include the valid time of the PDU session that the PIN is authorized to establish. The establishment time may be the current time when the SMF receives the second request message, or the establishment time indicated by the time information carried in the second request message. If the time information carried by the second request message comes from the first request message, for example, the PIN requests in advance that the PDU session is to be established at a specific time, the first request message carries the time information indicating the specific time, and the time information will be carried in the second request message and received by the SMF.

If the PINE requesting to establish a PDU session is located outside the valid spatial range in which the PIN is authorized to establish the PDU session, for example, a mobile phone or wearable device is the UE, if the valid spatial range is within 100 meters centered on the user's home, and the mobile phone or wearable device is carried by the user to an office 100 meters away from home, the mobile phone may be considered to be outside the valid spatial range when initiating the establishment of a PDU session based on the PIN ID, and such a PDU session may be rejected.

Of course, the above are merely one or more possible causes for the failure of the PDU session establishment indicated by the rejection cause when the rejection message is sent according to the subscription data of the PIN.

If a PIN requests to establish a PDU session multiple times, the SMF will store the subscription data of the PIN locally. At this time, the SMF can query the subscription data of the PIN locally.

If the SMF does not store the subscription data of the PIN locally, it can request the subscription data of the PIN from the UDM or UDR.

For example, the subscription data of the PIN includes at least one of:
capability information, indicating whether the PIN identified by the PIN ID has a PDU session capability, or whether the UE has PEGC and/or PMEC capabilities;
time information, indicating a time range in which establishment of a PDU session based on a PIN ID is permitted, or a time range in which establishment of a PDU session based on a PIN ID is prohibited;
spatial information, indicating a spatial range in which a PDU session is allowed to be established based on a PIN ID, or a spatial range in which a PDU session is prohibited to be established based on a PIN ID;
bandwidth information, indicating a bandwidth range which is allowed to be used by the PDU session established based on the PIN ID.

S3120 may include at least one of:
when the capability information indicates that the PIN does not have PDU session capability, or the UE does not have PEGC and/or PEMC capability, sending a rejection message to the AMF or MME;
when the capability information indicates that the PIN has a PDU session capability, or the UE has PEGC and/or PEMC capability, sending an acceptance message including the PIN ID to the AMF or MME;
when the establishment time of the requested PDU session is within the time range in which the establishment of the PDU session is permitted, sending an acceptance message including the PIN ID to the AMF or MME;
when the establishment time of the requested PDU session is outside the time range in which the establishment of the PDU session is permitted, sending a rejection message to the AMF or MME;
when the establishment time of the requested PDU session is within the time range in which the establishment of the PDU session is prohibited (i.e. not allowed), sending a rejection message to the AMF or MME;
when the establishment time of the requested PDU session is outside the time range in which the establishment of a PDU session is prohibited (i.e. not allowed), sending an acceptance message including the PIN ID to the AMF or MME;
when the UE requesting the PDU session is located within the spatial range in which establishment of the PDU session is permitted, sending an acceptance message including the PIN ID to the AMF or MME;
when the UE requesting a PDU Session is located outside the spatial range in which establishment of the PDU session is permitted, sending a rejection message to the AMF or MME;
when the UE requesting a PDU session is located within the spatial range in which the establishment of a PDU session is prohibited (i.e., not allowed), sending a rejection message to the AMF or MME;
when the UE requesting a PDU Session is located outside the spatial range in which establishment of a PDU Session is prohibited (i.e., not allowed), sending an acceptance message including the PIN ID to the AMF or MME.

In some embodiments, the subscription data of the PIN may further indicate whether other PINEs in the PIN are allowed to initiate PDU sessions associated with the PIN service. For example, the subscription data of the PIN may indicate whether a PEMC and/or a normal PINE with mobile communication capabilities in the PIN is allowed to initiate a PDU session associated with the PIN service. Therefore, in some cases, S3120 may further include:
when the UE initiating the establishment of the PDU session based on the PIN ID is a normal PINE or PEMC, it is determined whether the UE is allowed to initiate a session request based on PIN ID according to the subscription data of the PIN. If allowed, an acceptance message including the PIN ID is sent to the AMF or MME; otherwise, a rejection message is sent to the AMF or MME.

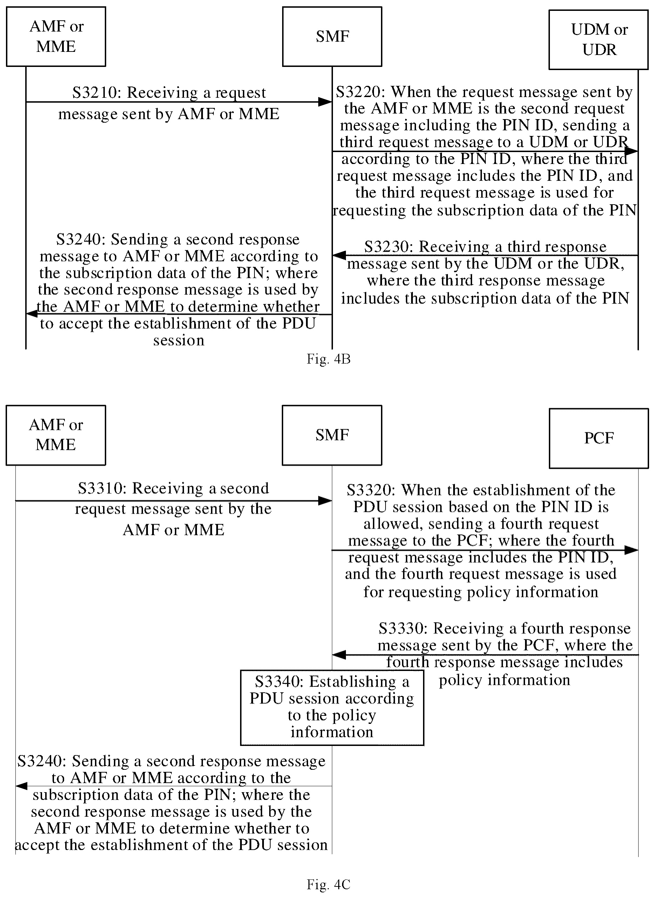

As shown in Fig. 4B, an embodiment of the present disclosure provides a method for establishing a PDU session, the method is performed by SMF and includes:
S3210: Receiving a request message sent by AMF or MME;
S3220: When the request message sent by the AMF or MME is the second request message including the PIN ID, sending a third request message to a UDM or UDR according to the PIN ID, where the third request message includes the PIN ID, and the third request message is used for requesting the subscription data of the PIN;
S3230: Receiving a third response message sent by the UDM or the UDR, wherein the third response message includes the subscription data of the PIN;
S3240: Sending a second response message to AMF or MME according to the subscription data of the PIN; where the second response message is used by the AMF or MME to determine whether to accept the establishment of the PDU session.

The UDM or UDR may be a core network device different from the AMF or MME and the SMF. For example, the UDM or UDR may be user data management (UDM) and/or unified data repository (UDR).

If the second request message carries a PIN ID, the UDM or UDR will send a third response message in response to the second request message. The third response message may include the subscription data of the PIN, which may also be referred to as PIN subscription data.

After receiving the PIN subscription data, the SMF can determine whether to agree, accept or allow the establishment of the PDU session.

As another example, in some embodiments, the third request message may include all the contents contained in the second request message. Whether to accept the establishment of the PDU session may be determined by the UDM or UDR. In this case, the third response message may directly indicate whether to agree or allow initiation of the process of PDU session establishment. If the establishment of the PDU session is allowed, the SMF will initiate the PDU session establishment process.

As shown in Fig. 4C, an embodiment of the present disclosure provides a method for establishing a PDU session, the method is performed by SMF and includes:
S3310: Receiving a second request message sent by the AMF or MME; where the second request message includes the PIN ID;
S3320: When the establishment of the PDU session based on the PIN ID is allowed, sending a fourth request message to the PCF; where the fourth request message includes the PIN ID, and the fourth request message is used for requesting policy information;
S3330: Receiving a fourth response message sent by the PCF, where the fourth response message includes policy information;
S3340: Establishing a PDU session according to the policy information;
S3350: Sending a second response message to AMF or MME according to the ID of the PDU session.

The PCF may be any device other than AMF or MME, SMF, UDM or UDR. The PCF may be a policy control function (PCF), etc.

After receiving the second request message, if it is determined that the PDU session is allowed to be established based on the locally stored PIN subscription data or PIN subscription data from UDM or UDR or permission from UDM or UDR, the SMF obtains the policy information of the PIN, which can also be referred to as PIN policy information. For example, if there are frequent PDU session establishments or updates associated with the PIN, the SMF may store the policy information of the PIN locally. If the SMF does not store the policy information locally, the SMF can request the policy information from the PCF; or, once the SMF determines that the PDU session establishment based on PIN is allowed, the SMF uniformly requests the policy information of the PIN from the PCF.

The policy information may include: one or more policy control and charging (PCC) and other policy-related information. The PCC rules can be used for SMF's PDU session establishment and/or management after the PDU session is established. For example, after receiving the policy information, the SMF generates N4 rules for establishing a PDU session. The N4 rules can be sent to the user plane function (UPF) associated with the PDU session. S3340 may include: initiating operations related to PDU session establishment. For the process of PDU session establishment, reference can be made to relevant technologies, and the specific implementation will not be repeated here.

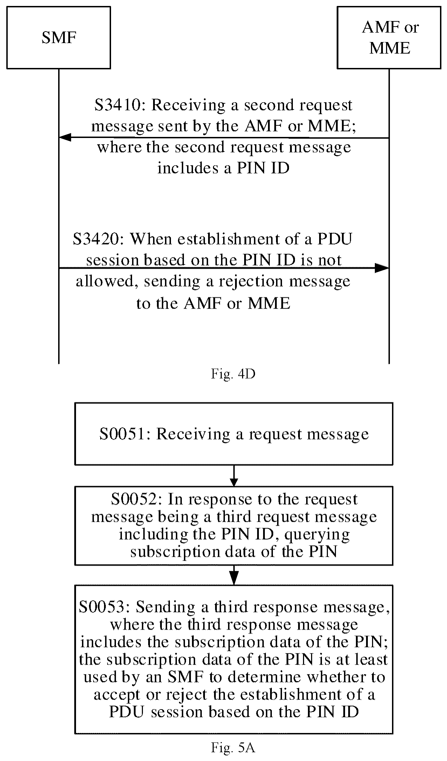

As shown in Fig. 4D, an embodiment of the present disclosure provides a method for establishing a PDU session, the method is performed by SMF and includes:
S3410: Receiving a second request message sent by the AMF or MME; where the second request message includes a PIN ID;
S3420: When establishment of a PDU session based on the PIN ID is not allowed, sending a rejection message to the AMF or MME.

For example, when the PIN subscription data locally stored by the SMF and/or the PIN subscription data requested from the UDM or UDR or the UDM or UDR indicates that the PIN-based PDU session is not allowed, a rejection message is sent directly to the AMF or MME.

In some embodiments, the method further includes:
when establishment of a PDU session based on a PIN ID is allowed, selecting a UPF; where the UPF is used to establish a PDU session based on a PIN ID.

If it is allowed to establish a PDU session based on PIN, a UPF that supports PIN services can be selected. For example, the UPF is selected based on the subscription data of the PIN, or the UPF is selected based on the local configuration of the SMF or the policy information of the PIN. After the UPF is selected, an N4 session will be established with the UPF, to establish, on a segment-by-segment basis, the PDU session which the UE requests to establish.

For example, establishing a session connection with UPF can be understood as: initiating PDU session establishment based on UPF, and the established PDU session can be used for data transmission of the PIN identified by the PIN ID.

This embodiment of the present disclosure is to support the UE to request the SMF to establish a PDU session based on the PIN ID. The SMF obtains the PIN policy information from the PCF, and sends the routing policy information or the policy parameters obtained based on the policy information to the UPF, so that the PIN traffic data is transmitted on a specific/expected routing path to ensure the QoS of the PIN service.

As shown in Fig. 5A, an embodiment of the present disclosure provides a method for establishing a protocol data unit (PDU) session, which is performed by a UDM or a UDR, and includes:
S0051: Receiving a request message;
S0052: In response to the request message being a third request message including the personal Internet network (PIN) identifier (ID), querying subscription data of the PIN;
S0053: Sending a third response message, wherein the third response message includes the subscription data of the PIN; wherein the subscription data of the PIN is at least used by a session management function (SMF) to determine whether to accept or reject the establishment of a PDU session based on the PIN ID.

The UDM or UDR may be any core network device different from AMF or MME and/or SMF.

The request message received from the SMF may or may not carry the PIN ID. If the request message received from the SMF carries the PIN ID, it means that the currently received request message is a second request message for requesting the subscription data of the PIN or for determining the authorization as to whether the UE can initiate the PDU session based on the PIN ID. The second request message may be any message exchanged between the SMF and the UDM, for example, messages such as Nudm_SDM_Get_Request.

In this way, UDM or UDR can assist SMF in deciding whether to accept the PDU session establishment based on the PIN ID initiated by UE.

It is worth noting that the second request message may also include the SUPI of the UE that initiates the PDU session establishment request.

If the request message received from the SMF does not include the PIN ID, the subscription data of the UE is obtained according to the SUPI included in the request message sent from the SMF, and/or it is determined whether to accept the PDU session request initiated by the UE according to the subscription data of the UE.

In some embodiments, the subscription data of the PIN includes at least one of:
capability information, indicating whether the PIN identified by the PIN ID has a PDU session capability, or whether the UE has PEGC and/or PMEC capabilities;
time information, indicating a time range in which establishment of a PDU session based on the PIN ID is permitted, or a time range in which establishment of a PDU session based on the PIN ID is prohibited (i.e., not permitted); or
spatial information, indicating the spatial range in which the establishment of a PDU session based on the PIN ID is permitted, or the spatial range in which the establishment of a PDU session based on the PIN ID is prohibited (i.e., not allowed).

Of course, the above is just an example of PIN subscription data, and the specific implementation is not limited to this example.

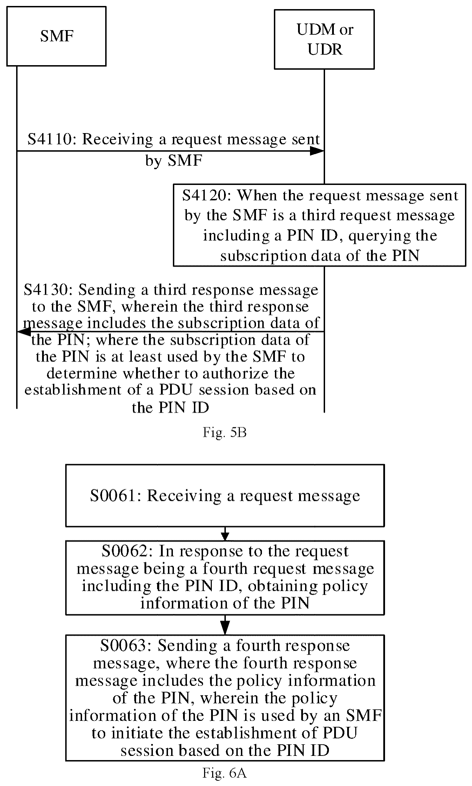

As shown in Fig. 5B, an embodiment of the present disclosure provides a method for establishing a protocol data unit (PDU) session, which is performed by a UDM or a UDR, and includes:
S4110: Receiving a request message sent by SMF;
S4120: When the request message sent by the SMF is a third request message including a personal Internet network (PIN) identifier (ID), querying the subscription data of the PIN;
S4130: Sending a third response message to the SMF, where the third response message includes the subscription data of the PIN; the subscription data of the PIN is at least used by the SMF to determine whether to authorize the establishment of a PDU session based on the PIN ID.

As shown in Fig. 6A, an embodiment of the present disclosure provides a method for establishing a PDU session, which is performed by a PCF, and includes:
S0061: Receiving a request message;
S0062: In response to the request message being a fourth request message including the personal Internet network (PIN) identifier (ID), obtaining policy information of the PIN;
S0063: Sending a fourth response message, wherein the fourth response message includes the policy information of the PIN, where the policy information of the PIN is used by a session management function (SMF) to initiate the establishment of PDU session based on the PIN ID.

The PCF may be any core network device other than AMF or MME, SMF and/or UDM or UDR. If the request message sent by the SMF does not include the PIN ID, the subscription data of the UE may be obtained according to the SUPI carried in the request message.

Obtaining the policy information of the PIN may include: generating the policy information of the PIN according to the PIN ID, or reading the policy information of the PIN stored locally.

In some embodiments, the PCF may request the subscription data of the PIN from the UDM or UDR, and generate policy information of the PIN according to the subscription data of the PIN, locally generated policies and/or configuration information, etc.

The locally generated policy may be a reference policy used by the PCF to generate policy information including PCC rules.

The configuration information may be any information configured by the operator for generating PCC rules and the like.

In some embodiments, the policy information of the PIN includes at least one of:
a quality of service (QoS) flow identifier (QFI);
a QoS profile; or
selection information used by the SMF to select a fifth network device to establish the PDU session.

This selection information can be used by the SMF to select a fifth network device such as UPF to establish the PDU session based on PIN ID.

The QFI may be associated with one or more sets of QoS parameters.

A QoS profile may include at least one of: a QoS rule, a QoS flow level, and/or a QoS parameter.

The QoS profile can also be used by the access device to initiate an update process based on a PDU session.

The QoS parameters here may include but are not limited to: bandwidth parameters and/or delay parameters, etc. The bandwidth parameters may include but are not limited to: minimum guaranteed bandwidth, or maximum guaranteed bandwidth and/or maximum allowed delay, etc., which can be used for monitoring PDU sessions.

Of course, the above is only an example of QoS parameters, and the specific implementation is not limited to this example.

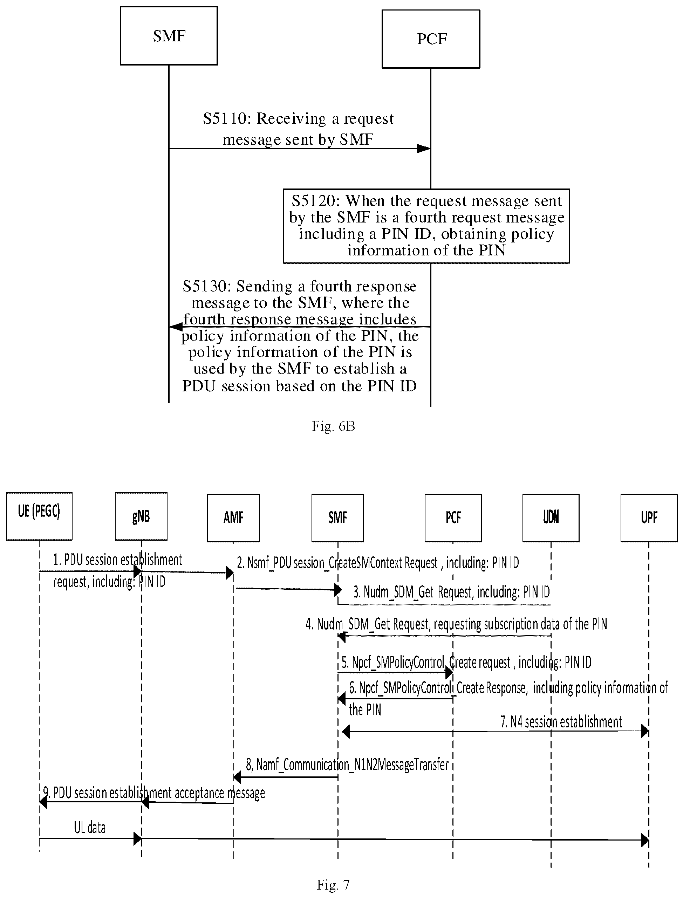

As shown in Fig. 6B, an embodiment of the present disclosure provides a method for establishing a PDU session, which is performed by a PCF, and includes:
S5110: Receiving a request message sent by SMF;
S5120: When the request message sent by the SMF is a fourth request message including a PIN ID, obtaining policy information of the PIN;
S5130: Sending a fourth response message to the SMF, where the fourth response message includes policy information of the PIN, wherein the policy information of the PIN is used by the SMF to establish a PDU session based on the PIN ID.

The present disclosure provides a method for establishing a PDU session, including: a user equipment (UE), an access management function (AMF) or mobility management entity (MME), and a session management function (SMF); the UE sending a first request message, the first request message includes: a personal Internet network (PIN) identifier (ID), and the first request message is used for requesting to establish a PDU session;
the UE receiving a first response message, where the first response message is used for indicating whether the PDU session based on the PIN ID is successfully established;
in response to the message requesting to establish the PDU session being the first request message including the personal Internet network (PIN) identifier (ID), the AMF or MME sending a second request message, where the second request message includes: the PIN ID; and the second request message is used by the SMF to determine whether to establish a PDU session based on the PIN ID; the AMF or MME receiving a second response message, where the second response message is used for indicating the acceptance or rejection of the establishment of a PDU session based on the PIN ID; the AMF or MME sending a first response message, where the first response message is used for indicating whether the PDU session based on the PIN ID is successfully established;
the SMF receiving a request message; in response to the received request message being a second request message including a personal Internet network (PIN) identifier (ID), the SMF determining to accept or reject the establishment of the PDU session based on the PIN ID and the subscription data of the PIN; and the SMF sending a second response message, where the second response message is used for indicating acceptance or rejection of the establishment of the PDU session based on the PIN ID.

For the expressions such as UE, AMF, MME, SMF, PIN, PIN ID and PDU session involved in this embodiment, the aforementioned embodiments may be referred, and the specific implementation is not limited to the aforementioned examples.

In this way, the establishment of a PDU session can be used to ensure the QoS of the PIN service.

In some embodiments, the method further includes:
the UDM or UDR in the core network device receiving the request message; in response to the request message being a third request message including the personal Internet network (PIN) identifier (ID), the UDM or UDR querying the subscription data of the PIN; the UDM or UDR sending a third response message, where the third response message includes the subscription data of the PIN; the subscription data of the PIN is at least used for determining whether to accept or reject the establishment of a PDU session based on the PIN ID;
   and/or
a policy control function (PCF) receiving a request message; in response to the request message sent by the second network device being a fourth request message including a personal Internet network (PIN) identifier (ID), the PCF obtaining policy information of the PIN; and the PCF sending a fourth response message, where the fourth response message includes the policy information of the PIN, wherein the policy information of the PIN is used to establish a PDU session based on the PIN ID.

When the subscription data of the PIN is not stored in the SMF, the SMF can request the subscription data of the PIN from the UDM or UDR.

The PCF is used to generate PIN policy information, which can be used by SMF, UPF and/or RAN to establish a PDU session based on the PIN ID and manage the PDU session.

As shown in Fig. 7, an embodiment of the present disclosure provides a PDU establishment method, which may include the following steps.
1. UE sends a PDU session establishment request message to an AMF through a gNB. The PDU session establishment request message includes a PIN ID.
2. AMF sends a PDU session establishment session management context request (Nsmf_PDUSession_CreateSMContext request) containing an SUPI and the PIN ID to an SMF.
3. The SMF sends an obtaining request (Nudm_SDM_Get request) including the SUPI and the PIN ID information to a UDM, to obtain subscription data related to the session management of the PIN.
4. The UDM sends a Nudm_SDM_Get response including the subscription data related to session management to the AMF.
5. The SMF sends a Npcf_SMPolicyControl_Create request including the SUPI and the PIN ID.
6. The PCF sends a Npcf_SMPolicyControl_Create response including policy information of the PIN.
7. The SMF initiates the establishment of N4 session between a UPF and the SMF. The establishment of N4 session is equivalent to the completion of at least part of the IDE of the network side PDU session establishment.
8. The SMF sends a communication message transfer (for example, Namf_Communication_N1N2MessageTransfer) to the AMF, the communication message transfer includes PDU session ID, QFIs, QoS profile, etc.
9. The AMF sends a PDU session establishment acceptance message to the UE.

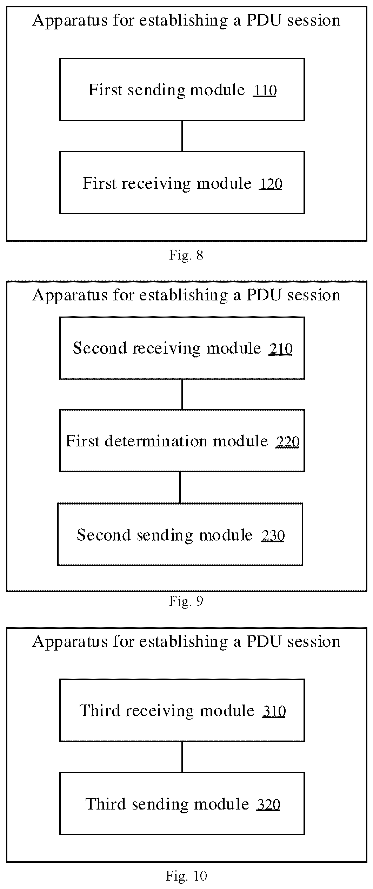

As shown in Fig. 8, an embodiment of the present disclosure provides an apparatus for establishing a protocol data unit (PDU) session, including:
a first sending module 110, configured to send a first request message, wherein the first request message includes: a personal Internet network (PIN) identifier (ID), and the first request message is used for requesting a core network device to establish a PDU session;
a first receiving module 120, configured to receive a first response message, wherein the first response message is used for indicating whether the PDU session based on the PIN ID is successfully established.

The apparatus for establishing a PDU session may be a UE, and the UE may be a PINE such as a PEGC and/or PEMC of a PIN.

For example, the first sending module 110 and the first receiving module 120 may be a transceiver antenna or a network interface, or may be a program module, a programmable array or an application-specific integrated circuit capable of performing the above operations. It can be understood that the apparatus also includes:
a determination module, configured to determine whether the to-be-established PDU session is associated with the PIN service;
wherein the first sending module 110 is configured to send a first request message to the first network device when the to-be-established PDU session is associated with the PIN service.

It can be understood that the determination module can be configured to perform at least one of:
in a case that a PIN service request sent by at least one PINE in the PIN is received, determining that the to-be-established PDU session is associated with the PIN service;
in a case that a PDU session establishment indication associated with the PIN service is detected, determining that the to-be-established PDU session is associated with the PIN service; or
in a case that a service involved in the to-be-established PDU session includes the PIN service, determining that the to-be-established PDU session is associated with the PIN service.

It can be understood that the UE is a PEGC.

As shown in Fig. 9, an embodiment of the present disclosure provides an apparatus for establishing a protocol data unit (PDU) session, including:
a second receiving module 210, configured to receive a message requesting to establish a PDU session;
a first determination module 220, configured to, in response to the message requesting to establish the PDU session being a first request message comprising a personal Internet network (PIN) identifier (ID), determine whether to accept or reject the PDU session based on the PIN ID;
a second sending module 230, configured to send a first response message, where the first response message is used for indicating to a user equipment (UE) whether the PDU session based on the PIN ID is successfully established.

The apparatus for establishing a PDU session may be a core network device such as MME, AMF, SMF, UDM, UDR and/or PCF.

For example, the second receiving module, the first determining module and the second sending module may be transceiver antennas or network interfaces, or may be program modules, programmable arrays or application-specific integrated circuits capable of performing the above operations.

It can be understood that the first determination module is configured to establish a PDU session based on the PIN ID, in response to that the message requesting to establish a PDU session is a first request message including a personal Internet network (PIN) identifier (ID), and the subscription data of the PIN identified by the PIN ID allows the establishment of a PDU session.

It can be understood that the first determination module is configured to reject the PDU session based on the PIN ID, in response to that the message requesting to establish a PDU session is a first request message including a personal Internet network (PIN) identifier (ID), and the subscription data of the PIN identified by the PIN ID does not allow the establishment of a PDU session.

As shown in Fig. 10, an embodiment of the present disclosure provides an apparatus for establishing a protocol data unit (PDU) session, including:
a third receiving module 310, which is configured as a third sending module, and is configured to, in response to a message requesting to establish the PDU session being a first request message including a personal Internet network (PIN) identifier (ID), send a second request message, wherein the second request message includes: the PIN ID; and the second request message is used by a session management function (SMF) to determine whether to accept or reject the establishment of a PDU session based on the PIN ID;
a third sending module 320, configured to receive a second response message, where the second response message is used for indicating acceptance or rejection of the establishment of the PDU session based on the PIN ID;
the third sending module 320 is further configured to send a first response message, the first response message is used for indicating to a user equipment (UE) whether the PDU session based on the PIN ID is successfully established.

The apparatus for establishing a PDU session may be a core network device such as AMF or MME.

For example, the third receiving module 310 and the third sending module 320 may be transceiver antennas or network interfaces, or may be program modules, programmable arrays or application-specific integrated circuits capable of performing the above operations.

It can be understood that the apparatus also includes:
a first selection module, configured to select the SMF supporting the PIN service session in response to the message requesting to establish the PDU session being a first request message including a personal Internet network (PIN) identifier (ID).

It can be understood that, in response to the second response message including the PDU session ID, the second response message also includes at least one of:
a quality of service (QoS) flow identifier (QFI);
a QoS profile.

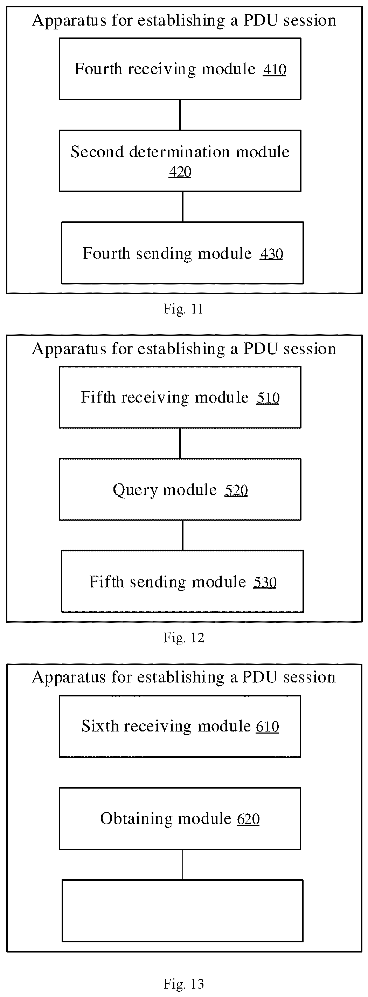

As shown in Fig. 11, an embodiment of the present disclosure provides an apparatus for establishing a protocol data unit (PDU) session, including:
a fourth receiving module 410, configured to receive a request message;
a second determination module 420, configured to, in response to the received request message being a second request message including a personal Internet network (PIN) identifier (ID), determine whether to accept or reject the establishment of the PDU session according to the PIN ID and the subscription data of the PIN;
a fourth sending module 430, configured to send a second response message, wherein the second response message is used for indicating, to an access management function (AMF) or mobility management entity (MME), acceptance or rejection of the establishment of the PDU session based on the PIN ID.

The apparatus for establishing a PDU session can be an SMF
For example, the fourth receiving module 410, the second determining module 420 and the fourth sending module 430 may be transceiver antennas or network interfaces, or may be program modules, programmable arrays or application-specific integrated circuits capable of performing the above operations.

It can be understood that the fourth sending module 410 is also configured to send a third request message, where the third request message includes the PIN ID, and the third request message is used for requesting the subscription data of the PIN; the fourth receiving module is also configured to receive a third response message, where the third response message includes the subscription data of the PIN.

It can be understood that the fourth sending module is also configured to, when the establishment of the PDU session based on the PIN ID is allowed, send a fourth request message to the PCF; where the fourth request message includes the PIN ID, and the fourth request message is used for requesting policy information; the fourth receiving module is also configured to receive a fourth response message, where the fourth response message includes the policy information; the policy information is used to establish the PDU session.

In some embodiments, the apparatus also includes: a second selection module, configured to select a user plane function (UPF) in the core network device according to the subscription data of the PIN in response to that the establishment of a PDU session based on the PIN ID is allowed; where the UPF is used to establish the PDU session.

As shown in Fig. 12, an embodiment of the present disclosure provides an apparatus for establishing a protocol data unit (PDU) session, including:
a fifth receiving module 510, configured to receive a request message;
a query module 520, configured to, in response to the request message sent by a second network device being a third request message including a personal Internet network (PIN) identifier (ID), query subscription data of the PIN;
a fifth sending module 530, configured to send a third response message, wherein the third response message includes the subscription data of the PIN; wherein the subscription data of the PIN is at least used by a session management function (SMF) to determine whether to accept or reject the establishment of a PDU session based on the PIN ID.

The apparatus for establishing a PDU session may be a core network device such as UDM or UDR.

For example, the fifth receiving module 510, the query module 520 and the fifth sending module 530 may be transceiver antennas or network interfaces, or may be program modules, programmable arrays or application-specific integrated circuits capable of performing the above operations.

In some embodiments, the apparatus further includes:
a second selection module, configured to select a UPF in a core network device according to subscription data of the PIN in response to that establishment of a PDU session based on the PIN ID is allowed; where the UPF is used to establish the PDU session.

It can be understood that the subscription data of the PIN includes at least one of:
capability information indicating whether the PIN identified by the PIN ID has a PDU session capability, or whether the UE has PEGC and/or PEMC capability;
time information, indicating a time range in which establishment of a PDU session based on the PIN ID is permitted, or a time range in which establishment of a PDU session based on the PIN ID is prohibited;
spatial information, indicating a spatial range in which establishment of a PDU session based on the PIN ID is permitted, or a spatial range in which establishment of a PDU session based on the PIN ID is prohibited;
bandwidth information, indicating a bandwidth range which is allowed to be used by the PDU session established based on the PIN ID.

As shown in Fig. 13, an embodiment of the present disclosure provides an apparatus for establishing a protocol data unit (PDU) session, including:
a sixth receiving module 610, configured to receive a request message;
an obtaining module 620, configured to obtain the policy information of the PIN in response to the request message sent by the second network device being a fourth request message including the personal Internet network (PIN) identifier (ID);
a sixth sending module 630, configured to send a fourth response message, wherein the fourth response message includes the policy information of the PIN, where the policy information of the PIN is used by a session management function (SMF) to establish a PDU session based on the PIN ID.

The apparatus for establishing a PDU session may be a PCF.

For example, the sixth receiving module, the obtaining module and the sixth sending module may be a transceiver antenna or a network interface, or may be a program module, a programmable array or an application-specific integrated circuit capable of performing the above operations.

In some embodiments, the policy information of the PIN includes at least one of:
a quality of service (QoS) flow identifier (QFI);
a QoS profile;
selection information used by the second network device to select a fifth network device for establishing a PDU session.

An embodiment of the present disclosure provides a communication system, which is used to execute the aforementioned methods for establishing a PDU session performed by the UE and by the AMF or MME.

An embodiment of the present disclosure provides a communication system, which includes the following network elements:
an access management function (AMF) or mobility management entity (MME) for executing the method for establishing a PDU session provided by any technical solution of the third aspect;
a session management function (SMF) for executing the method for establishing a PDU session provided by any technical solution of the fourth aspect;
a user data management (UDM) or unified data repository (UDR) for executing the method for establishing a PDU session provided by any technical solution of the fifth aspect;
a PCF for executing the method for establishing a PDU session provided by the technical solution of the sixth aspect.

An embodiment of the present disclosure provides a communication device, including:
a memory for storing processor-executable instructions;
a processor, connected to the memory;
where the processor is configured to execute the PDU session method provided by any of the aforementioned technical solutions.

The processor may include various types of storage media, which are non-transitory computer storage media that can continue to retain information stored thereon after the communication device powers off.

Here, the communication device includes: UE or network device. The network device may be AMF, MME, SMF, PCF, UDM, UDR and/or PCF and other network device.

The processor can be connected to the memory via a bus, etc., for reading an executable program stored in the memory, for example, at least one of the methods shown in Figs. 1B to 1E, Figs. 2A to 2B, Figs. 3A to 3B, Figs. 4A to 4D, Figs. 5A to 5B, Figs. 6A to 6B and Fig. 7.

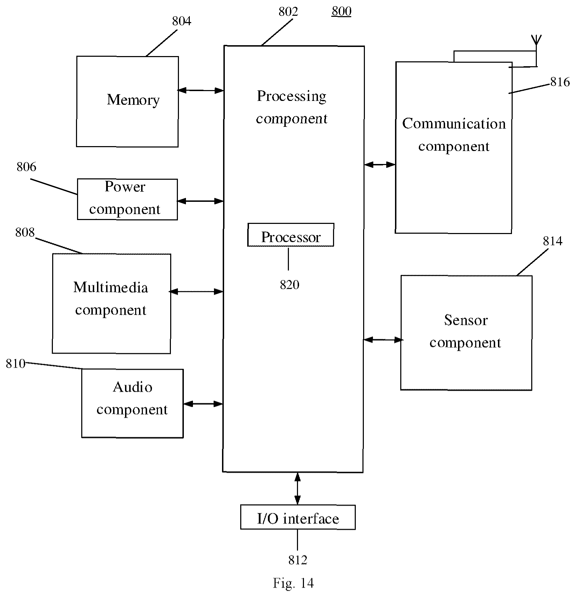

Fig. 14 is a block diagram of a UE 800 according to an exemplary embodiment. For example, the UE 800 may be a mobile phone, a computer, a digital broadcast user equipment, a messaging device, a game console, a tablet device, a medical device, a fitness device, a personal digital assistant, etc.

Refer to Fig. 14, UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the UE 800, such as operations associated with display, phone calls, data communications, camera operations, and recording operations. The processing component 802 may include one or more processors 820 to execute instructions to generate all or part of the steps of the above-mentioned method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the UE 800. Examples of such data include instructions for any application or method operating on the UE 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disc.

The power component 806 provides power to various components of the UE 800. The power component 806 can include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the UE 800 is in an operating mode, such as a photographing mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC), and when the UE 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

I/O interface 812 provides an interface between processing component 802 and peripheral interface modules, such as keyboards, click wheels, buttons, etc. These buttons may include but are not limited to: home button, volume button, start button, and lock button.

The sensor assembly 814 includes one or more sensors for providing various aspects of status assessment for the UE 800. For example, the sensor assembly 814 can detect the on/off state of the device 800, the relative positioning of components, such as the display and keypad of the UE 800, and the sensor assembly 814 can also detect the position change of the UE 800 or a component of the UE 800, the presence or absence of contact between the user and the UE 800, the orientation or acceleration/deceleration of the UE 800, and the temperature change of the UE 800. The sensor assembly 814 may include a proximity sensor configured to detect the presence of nearby objects without any physical contact. The sensor assembly 814 may also include an optical sensor, such as a CMOS or CCD image sensor, for use in imaging applications. In some embodiments, the sensor assembly 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 can access a wireless network based on a communication standard, such as WiFi, 2G or 3G, or a combination thereof. In an exemplary embodiment, the communication component 816 receives a broadcast signal or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an exemplary embodiment, a non-transitory computer-readable storage medium including instructions is also provided, such as a memory 804 including instructions, and the above instructions can be executed by the processor 820 of the UE 800 to generate the above method. For example, the non-transitory computer-readable storage medium can be a ROM, a random access memory (RAM), a CD-ROM, a magnetic tape, a floppy disk, an optical data storage device, etc.

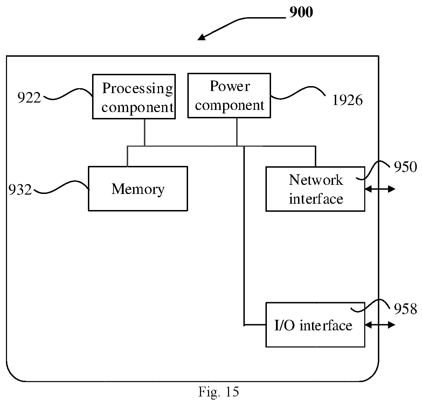

As shown in Fig. 15, an embodiment of the present disclosure shows a structure of a network device. Referring to Fig. 15, the network device 900 includes a processing component 922, which further includes one or more processors, and a memory resource represented by a memory 932 for storing instructions that can be executed by the processing component 922, such as an application. The application stored in the memory 932 may include one or more modules, each corresponding to a set of instructions. In addition, the processing component 922 is configured to execute instructions to perform any of the aforementioned methods applied to the access device, for example, at least one of the methods shown in Figs. 1B to 1E, Figs. 2A to 2B, Figs. 3A to 3B, Figs. 4A to 4D, Figs. 5A to 5B, Figs. 6A to 6B and Fig. 7.

The network device 900 may also include a power supply component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server ^{™}, Mac OS X^{™}, Unix^{™}, Linux^{™}, FreeBSD^{™} or the like.

In the absence of contradiction, each step in a certain implementation mode or example can be implemented as an independent example, and the steps can be arbitrarily combined. For example, a solution after removing some steps in a certain implementation mode or example can also be implemented as an independent example, and the order of the steps in a certain implementation mode or example can be arbitrarily exchanged. In addition, the optional methods or optional examples in a certain implementation mode or example can be arbitrarily combined; in addition, the various implementation modes or examples can be arbitrarily combined. For example, some or all steps of different implementation modes or examples can be arbitrarily combined, and a certain implementation mode or example can be arbitrarily combined with the optional methods or optional examples of other implementation modes or examples.

Those skilled in the art would think of other implementations of the embodiments of the present disclosures after considering the specification and practicing the invention disclosed herein. The present disclosure is intended to cover any variations, uses, or adaptations of the embodiments of the present disclosure, which follow the general principles of the embodiments of the present disclosure and include common knowledge or customary technical means in the art that are not disclosed in the present disclosure. The specification and examples are to be considered merely exemplary, and the true scope and spirit of the embodiments of the present disclosure are indicated by the appended claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

## Claims

1. A method for establishing a protocol data unit (PDU) session, wherein the method is performed by a user equipment (UE), and comprises:
sending a first request message, wherein the first request message comprises: a personal Internet network (PIN) identifier (ID), and the first request message is used for requesting a core network device to establish a PDU session; and
receiving a first response message, wherein the first response message is used for indicating whether a PDU session based on the PIN ID is successfully established.

2. The method according to claim 1, further comprising:
determining whether the to-be-established PDU session is associated with a PIN service;
wherein sending the first request message comprises:
in a case that the to-be-established PDU session is associated with the PIN service, sending the first request message.

3. The method according to claim 2, wherein determining whether the to-be-established PDU session is associated with the PIN service comprises at least one of:
in a case that a PIN service request sent by at least one personal Internet network element (PINE) in the PIN is received, determining that the to-be-established PDU session is associated with the PIN service;
in a case that a PDU session establishment indication associated with the PIN service is detected, determining that the to-be-established PDU session is associated with the PIN service; or
in a case that a service involved in the to-be-established PDU session comprises the PIN service, determining that the to-be-established PDU session is associated with the PIN service.

4. The method according to any one of claims 1 to 3, wherein the UE is a PINE with gateway capability (PEGC) and/or a PINE with management capability (PEMC).

5. A method for establishing a protocol data unit (PDU) session, wherein the method is performed by a core network device, and comprises:
receiving a message requesting to establish a PDU session;
in response to the message requesting to establish the PDU session being a first request message comprising a personal Internet network (PIN) identifier (ID), determining to accept or reject the PDU session based on the PIN ID; and
sending a first response message, wherein the first response message is used for indicating to a user equipment (UE) whether the PDU session based on the PIN ID is successfully established.

6. The method according to claim 5, wherein in response to the message requesting to establish the PDU session being the first request message comprising the PIN ID, determining to accept or reject the PDU session based on the PIN ID comprises:
in response to the message requesting to establish the PDU session being the first request message including the PIN ID, and based on subscription data of the PIN identified by the PIN ID permitting the establishment of the PDU session, establishing the PDU session based on the PIN ID.

7. The method according to claim 5, wherein in response to the message requesting to establish the PDU session being the first request message comprising the PIN ID, determining to accept or reject the PDU session based on the PIN ID comprises:
in response to the message requesting to establish the PDU session being the first request message comprising the PIN ID, and based on subscription data of the PIN identified by the PIN ID not permitting the establishment of the PDU session, rejecting the PDU session based on the PIN ID.

8. A method for establishing a protocol data unit (PDU) session, wherein the method is performed by an access management function (AMF) or a mobility management entity (MME), and comprises:
in response to a message requesting to establish a PDU session being a first request message comprising a personal Internet network (PIN) identifier (ID), sending a second request message, wherein the second request message comprises: the PIN ID; and the second request message is used by a session management function (SMF) to determine whether to accept or reject the establishment of the PDU session based on the PIN ID;
receiving a second response message, wherein the second response message is used for indicating to accept or reject the establishment of the PDU session based on the PIN ID; and
sending a first response message, wherein the first response message is used for indicating whether the PDU session based on the PIN ID is successfully established.

9. The method according to claim 8, wherein in response to the message requesting to establish the PDU session being the first request message comprising the PIN ID, sending the second request message comprises:
in response to the message requesting to establish the PDU session being the first request message comprising the PIN ID, selecting the SMF supporting a PIN service session.

10. The method according to claim 8 or 9, wherein, in response to the second response message comprising the PDU session ID, the second response message further comprises at least one of:
a quality of service (QoS) flow identifier (QFI); or
a QoS profile.

11. A method for establishing a protocol data unit (PDU) session, wherein the method is performed by a session management function (SMF) in a core network device, and comprises:
receiving a request message;
in response to the received request message being a second request message comprising a personal Internet network (PIN) identifier (ID), determining to accept or reject the establishment of the PDU session according to the PIN ID and subscription data of the PIN; and
sending a second response message, wherein the second response message is used for indicating, to an access management function (AMF) or a mobility management entity (MME), acceptance or rejection of the establishment of the PDU session based on the PIN ID.

12. The method according to claim 11, wherein in response to the received request message being the second request message comprising the PIN ID, determining to accept or reject the establishment of the PDU session according to the PIN ID and the subscription data of the PIN comprises:
sending a third request message, wherein the third request message comprises the PIN ID, and the third request message is used for requesting the subscription data of the PIN; and
receiving a third response message, wherein the third response message comprises the subscription data of the PIN.

13. The method according to claim 11 or 12, further comprising:
in response to permitting the establishment of the PDU session based on the PIN ID, sending a fourth request message; wherein the fourth request message comprises the PIN ID, and the fourth request message is used for requesting policy information; and
receiving a fourth response message, wherein the fourth response message comprises the policy information, and the policy information is used for establishing the PDU session.

14. The method according to claim 13, further comprising:
in response to permitting the establishment of the PDU session based on the PIN ID, selecting a user plane function (UPF) in the core network device according to the subscription data of the PIN, wherein the UPF is used to establish the PDU session.

15. A method for establishing a protocol data unit (PDU) session, wherein the method is performed by a user data management (UDM) or a unified data repository (UDR) in a core network device, and comprises:
receiving a request message;
in response to the request message being a third request message comprising a personal Internet network (PIN) identifier (ID), querying subscription data of the PIN; and
sending a third response message, wherein the third response message comprises the subscription data of the PIN; wherein the subscription data of the PIN is at least used by a session management function (SMF) to determine whether to accept or reject the establishment of the PDU session based on the PIN ID.

16. The method according to claim 15, wherein the subscription data of the PIN comprises at least one of:
capability information, indicating whether the PIN identified by the PIN ID has a PDU session capability, or whether a UE has PEGC and/or PEMC capability;
time information, indicating a time range in which establishment of the PDU session based on the PIN ID is permitted, or a time range in which establishment of the PDU session based on the PIN ID is prohibited;
spatial information, indicating a spatial range in which establishment of the PDU session based on the PIN ID is permitted, or a spatial range in which establishment of the PDU session based on the PIN ID is prohibited; or
bandwidth information, indicating a bandwidth range which is allowed to be used by the PDU session established based on the PIN ID.

17. A method for establishing a protocol data unit (PDU) session, wherein the method is performed by a policy control function (PCF) in a core network device, and comprises:
receiving a request message;
in response to the request message being a fourth request message comprising a personal Internet network (PIN) identifier (ID), obtaining policy information of the PIN; and
sending a fourth response message, wherein the fourth response message comprises the policy information of the PIN, wherein the policy information of the PIN is used by a session management function (SMF) to initiate establishment of the PDU session based on the PIN ID.

18. The method according to claim 17, wherein the policy information of the PIN comprises at least one of:
a quality of service (QoS) flow identifier (QFI);
a QoS profile; or
selection information, used for a second network device to select a fifth network device for establishing the PDU session.

19. An apparatus for establishing a protocol data unit (PDU) session, comprising:
a first sending module, configured to send a first request message, wherein the first request message comprises: a personal Internet network (PIN) identifier (ID), and the first request message is used for requesting a core network device to establish the PDU session; and
a first receiving module, configured to receive a first response message, wherein the first response message is used for indicating whether the PDU session based on the PIN ID is successfully established.

20. An apparatus for establishing a protocol data unit (PDU) session, comprising:
a second receiving module, configured to receive a message requesting to establish a PDU session;
a first determination module, configured to, in response to the message requesting to establish the PDU session being a first request message comprising a personal Internet network (PIN) identifier (ID), determine whether to accept or reject the PDU session based on the PIN ID; and
a second sending module, configured to send a first response message, wherein the first response message is used for indicating to a user equipment (UE) whether the PDU session based on the PIN ID is successfully established.

21. An apparatus for establishing a protocol data unit (PDU) session, comprising:
a third sending module, configured to, in response to a message requesting to establish a PDU session being a first request message comprising a personal Internet network (PIN) identifier (ID), send a second request message, wherein the second request message comprises: the PIN ID; and the second request message is used by a session management function (SMF) to determine whether to accept or reject the establishment of a PDU session based on the PIN ID;
a third receiving module, configured to receive a second response message, wherein the second response message is used for indicating to accept or reject the establishment of the PDU session based on the PIN ID;
wherein the third sending module is configured to send a first response message, wherein the first response message is used for indicating to a user equipment (UE) whether the PDU session based on the PIN ID is successfully established.

22. An apparatus for establishing a protocol data unit (PDU) session, comprising:
a fourth receiving module, configured to receive a request message;
a second determination module, configured to, in response to the received request message being a second request message comprising a personal Internet network (PIN) identifier (ID), determine whether to accept or reject the establishment of the PDU session according to the PIN ID and subscription data of the PIN; and
a fourth sending module, configured to send a second response message, wherein the second response message is used for indicating, to an access management function (AMF) or a mobility management entity (MME), acceptance or rejection of the establishment of the PDU session based on the PIN ID.

23. An apparatus for establishing a protocol data unit (PDU) session, comprising:
a query module, configured to, in response to the request message sent by a second network device being a third request message comprising a personal Internet network (PIN) identifier (ID), query subscription data of the PIN; and
a fifth sending module, configured to send a third response message, wherein the third response message comprises the subscription data of the PIN; wherein the subscription data of the PIN is at least used by a session management function (SMF) to determine whether to accept or reject the establishment of the PDU session based on the PIN ID.

24. An apparatus for establishing a protocol data unit (PDU) session, comprising:
a sixth receiving module, configured to receive a request message;
an obtaining module, configured to, in response to the request message sent by a second network device being a fourth request message comprising a personal Internet network (PIN) identifier (ID), obtain policy information of the PIN; and
a sixth sending module, configured to send a fourth response message, wherein the fourth response message comprises the policy information of the PIN, wherein the policy information of the PIN is used by a session management function (SMF) to establish the PDU session based on the PIN ID.

25. A method for establishing a PDU session, comprising: a user equipment (UE), an access management function (AMF) or a mobility management entity (MME), and a session management function (SMF);
sending, by the UE, a first request message, wherein the first request message comprises: a personal Internet network (PIN) identifier (ID), and the first request message is used for requesting to establish the PDU session;
receiving, by the UE, a first response message, wherein the first response message is used for indicating whether the PDU session based on the PIN ID is successfully established;
in response to the message requesting to establish the PDU session being the first request message comprising the personal Internet network (PIN) identifier (ID), sending, by the AMF or MME, a second request message, wherein the second request message comprises: the PIN ID; and the second request message is used by the SMF to determine whether to establish the PDU session based on the PIN ID;
receiving, by the AMF or MME, a second response message, wherein the second response message is used for indicating to accept or reject the establishment of a PDU session based on the PIN ID;
sending, by the AMF or MME, a first response message, wherein the first response message is used for indicating whether the PDU session based on the PIN ID is successfully established;
receiving, by the SMF, a request message;
in response to the received request message being a second request message comprising the personal Internet network (PIN) identifier (ID), determining, by the SMF, to accept or reject the establishment of the PDU session based on the PIN ID and the subscription data of the PIN; and
sending, by the SMF, a second response message, wherein the second response message is used for indicating to accept or reject the establishment of the PDU session based on the PIN ID.

26. The method according to claim 25, further comprising:
receiving, by a user data management (UDM) or a unified data repository (UDR) in a core network device, a request message;
in response to the request message being a third request message comprising the personal Internet network (PIN) identifier (ID), querying, by the UDM or the UDR in the core network device, the subscription data of the PIN; and
sending, by the UDM or the UDR in the core network device, a third response message, wherein the third response message comprises the subscription data of the PIN; wherein the subscription data of the PIN is at least used for determining whether to accept or reject the establishment of the PDU session based on the PIN ID;
and/or
receiving, by a policy control function (PCF), a request message;
in response to the request message sent by a second network device being a fourth request message comprising the personal Internet network (PIN) identifier (ID), obtaining, by the PCF, policy information of the PIN; and
sending, by the PCF, a fourth response message, wherein the fourth response message comprises the policy information of the PIN, wherein the policy information of the PIN is used for establishing a PDU session based on the PIN ID.

27. A communication system for performing the method according to any one of claims 1 to 7.

28. A communication system, comprising following network elements:
an access management function (AMF) or mobility management entity (MME) for performing the method according to any one of claims 8 to 10;
a session management function (SMF) for performing the method according to any one of claims 11 to 14;
a user data management (UDM) or unified data repository (UDR) for performing the method according to any one of claims 15 to 16;
a policy control function (PCF) for performing the method according to any one of claims 17 to 18.

29. A communication device, comprising a processor, a transceiver, a memory, and an executable program stored in the memory and executable by the processor, wherein when the processor executes the executable program, the method according to any one of claims 1 to 4, any one of claims 5 to 7, any one of claims 8 to 10, any one of claims 11 to 14, any one of claims 15 to 16, or any one of claims 17 to 18 is performed.

30. A computer storage medium storing an executable program, wherein when the executable program is executed by a processor, the method according to any one of claims 1 to 4, any one of claims 5 to 7, any one of claims 8 to 10, any one of claims 11 to 14, any one of claims 15 to 16, or any one of claims 17 to 18 is performed.
